# EUROPEAN PATENT SPECIFICATION

(11) **EP 2 819 311 B1**
(45) Date of publication and mention of the grant of the patent: **03.04.2019**
(21) Application number: 13751156.4
(22) Date of filing: 06.02.2013
(51) Int. Cl.: H01Q 1/46

(54) **INPUT/OUTPUT APPARATUS**
EINGABE/AUSGABE-VORRICHTUNG
APPAREIL D'ENTRÉE-SORTIE

(30) Priority: 23.02.2012 JP 2012036952; 27.12.2012 JP 2012284664
(43) Date of publication of application: 31.12.2014
(73) Proprietor: Sony Corporation, Tokyo 108-0075 (JP)
(72) Inventor: YOSHINO, Yoshitaka, Tokyo 108-0075 (JP); TSUBOI, Satoru, Tokyo 108-0075 (JP); IMAI, Tadashi, Tokyo 108-0075 (JP); ISHIZUKA, Akira, Tokyo 108-0075 (JP)
(74) Representative: Müller Hoffmann & Partner
(86) International application number: PCT/JP2013/052711
(87) International publication number: WO 2013/125347

(56) References cited:
- WO-A1-2008/114098
- WO-A1-2012/157377
- JP-A- 2000 358 223
- JP-A- 2003 061 256
- JP-A- 2006 222 892
- JP-A- 2007 065 818
- JP-A- 2007 219 891
- JP-A- 2008 072 022
- JP-A- 2010 219 904
- JP-A- 2011 087 166
- JP-A- 2011 205 595
- KR-B1- 101 003 578
- US-A1- 2009 033 574
- US-A1- 2010 169 534
- US-A1- 2011 235 844
- YARRA S: "USB OTG software frees dual-role handheld devices", EDN ELECTRICAL DESIGN NEWS.(TEXAS INSTRUMENT), REED BUSINESS INFORMATION, HIGHLANDS RANCH, CO, US, vol. 47, no. 11, 16 May 2002 (2002-05-16), pages 83-84,86,88, XP002341837, ISSN: 0012-7515

## Description

### Technical Field

The present disclosure relates to an input/output apparatus obtained by extending the function of an input/output terminal used for input/output of an information terminal device.

### Background Art

To receive TV broadcasting by an information terminal device such as a mobile phone, one of the method of providing a dedicated receiving antenna inside the information terminal device and the method of capturing antenna input from an earphone terminal to listen to an audio signal is generally used.

In addition, TV sets can now be easily moved through the miniaturization thereof and there is also a desire to receive TV broadcasting in a room in which there is no antenna receptacle for TV broadcasting such as a kitchen in the home. In such a case, using a power transmission cable as an antenna for TV broadcasting is proposed (see, for example, Patent Literature 1).

According to the technology described in Patent Literature 1, the distance between an inductor for high-frequency cutoff provided on a power supply circuit side of a power transmission cable and an inductor for high-frequency cutoff provided on a mobile terminal side is set to an integral multiple of the 1/4 wavelength of the carrier frequency of received TV broadcasting or the like. Accordingly, TV broadcasting or the like in a wide frequency band can be received.

Also, a receiving apparatus capable of obtaining sufficient antenna characteristics even if a connector is shared when a cable used as an antenna is caused to transmit another signal whose frequency overlaps is proposed by the present inventors (see Patent Literature 2).

WO 2008/114098 A1 discloses devices that comprise a connector of a digital interface comprising a plurality of ports. A first device is configured to apply an antenna signal in analog format to at least one of said ports. A second device is configured to tap an antenna signal in analog format from at least one of said ports. Further, a system and methods for transferring an antenna signal in analog format via at least one port of a connector of a digital interface, and a use of at least one port of a connector of a digital interface for transferring an antenna signal in analog format are disclosed.

US 2011/235844 A1 discloses a connecting device that includes an audio signal plug to which an audio signal transmission cable including at least three lines can be connected, the audio signal plug including at least three plug terminals. The three plug terminals of the audio signal plug include first, second, and third plug terminals. The first plug terminal functions as a signal line in which a high-frequency signal is superimposed on an audio signal. The second plug terminal different from the first plug terminal functions as a ground for low-frequency and high-frequency. The third plug terminal different from the first and second plug terminals functions as a ground by capacitive coupling for the high-frequency, and has a function for transmitting a signal different from a signal of the first plug terminal for the low-frequency.

KR 101 003 578 B1 is concerned with providing a broadcasting receiving antenna which improves broadcasting reception efficiency by preventing noise from flowing into an antenna through a signal interceptor. To this end, a plug connector is disclosed that is connected to the multi connection connector of a mobile radio terminal. The plug connector is installed on a circuit board. An antenna body stores the plug connector and the circuit board. An antenna recognition part recognizes whether a broadcasting receiving antenna is connected to the mobile radio terminal. An antenna part includes a RX-antenna and a compensation antenna. A signal interceptor prevents noise from flowing into a device through a power terminal and a data terminal.

WO 2012/157377 A1 was published after the priority date of the present application and discloses an ID terminal of a USB cable, which is to be connected to an information terminal device, and which is connected to the metal shield of the USB cable. The metal shield of the USB cable and the ground line are used to configure a dipole antenna. As a result, radio waves of the FM band, VHF band, or UHF band can be received while maintaining the function as a USB cable.

### Citation List

### Patent Literature

Patent Literature 1: JP 2010-157991A
Patent Literature 2: JP 2010-219904A

### Summary of Invention

### Technical Problem

However, a conventional earphone antenna or an antenna using a power transmission cable needs a special cord or cable for the antenna and there arises a problem that, for example, it is difficult to use the antenna also for other signal transmission. In addition, providing a special antenna inside an information terminal device constitutes an obstacle to slimming down and miniaturization of the information terminal device.

The present disclosure is developed in view of the above problems and an object thereof is to provide an input/output apparatus capable of receiving a radio wave of an FM radio or television via a cable connected to an input/output terminal of an information processing terminal device.

### Solution to Problem

The above problem is solved by the subject-matter of the independent claim and further preferred embodiments are defined by the dependent claims.

### Advantageous Effects of Invention

According to an input/output apparatus in the present disclosure, there is no need to provide a space of a new connector for an antenna on the side of an information terminal device and therefore, further slimming down and miniaturization of the information terminal device can be realized. In addition, an operation effect that can pass signals of a wide band ranging from the MHz band to the GHz band is confirmed.

### Brief Description of Drawings

FIG. 1 is a diagram illustrating an overview of an embodiment of an input/output apparatus according to the present disclosure.
FIG. 2 is a diagram illustrating examples of a USB-SMA conversion cable having a USB connector connected to one end thereof and an SMA connector connected to the other end thereof.
FIG. 3 is a diagram showing that frequency characteristics of samples (five) of the USB-SMA conversion cable illustrated in FIG. 2 yielded substantially the same results.
FIG. 4 is a diagram illustrating an eye pattern obtained by performing a transmission test of a differential signal of USB 2.0 using the USB-SMA conversion cable illustrated in FIG. 2.
FIG. 5 is a conceptual diagram illustrating another embodiment in which both of a coaxial cable and a USB cable to connect to an external antenna unit are connected to the input/output apparatus according to the present disclosure.
FIG. 6 is a diagram illustrating specific connection relationships when both the coaxial cable and the USB cable in FIG. 5 are connected to a USB input/output apparatus.
FIG. 7 is a diagram illustrating an example of an earphone antenna produced by connecting the USB cable and an earphone cord.
FIG. 8 is a diagram illustrating a specific connection configuration of the earphone antenna in FIG. 7.
FIG. 9A is a diagram illustrating measured frequency-gain (peak gain) characteristics of the earphone antenna in FIG. 7.
FIG. 9B is a diagram illustrating measured frequency-gain (peak gain) characteristics of the earphone antenna in FIG. 7.
FIG. 10A is a diagram illustrating a substrate configuration to obtain pass characteristics in the GHz band by the input/output apparatus according to the present disclosure.
FIG. 10B is a diagram illustrating a substrate configuration to obtain pass characteristics in the GHz band by the input/output apparatus according to the present disclosure.
FIG. 10C is a diagram illustrating a substrate configuration to obtain pass characteristics in the GHz band by the input/output apparatus according to the present disclosure.
FIG. 11 is a diagram illustrating frequency characteristics of the sample (one) of the USB-SMA conversion cable when the substrate configuration illustrated in FIG. 10 is adopted.
FIG. 12 is a diagram illustrating the functions of a USB terminal and an MHL terminal in comparison in the input/output apparatus of the present disclosure.
FIG. 13 is a diagram illustrating a system configuration example (connection example) compliant with the HDMI standard, which is used in the input/output apparatus according to the present disclosure.
FIG. 14 is a diagram illustrating the use of a cable compliant with the HDMI standard, which is used in the input/output apparatus according to the present disclosure.
FIG. 15 is a diagram illustrating a configuration of a connector compliant with the HDMI standard, which is used in the input/output apparatus according to the present disclosure.
FIG. 16 is a diagram illustrating a configuration example at the time of HEAC compliant with the HDMI standard, which is used in the input/output apparatus according to the present disclosure.
FIG. 17 is a diagram illustrating a modification of a configuration of a connector compliant with the HDMI standard, which is used in the input/output apparatus according to the present disclosure.
FIG. 18 is a diagram illustrating another modification of a configuration of a connector compliant with the HDMI standard, which is used in the input/output apparatus according to the present disclosure.

### Description of Embodiments

With further slimming down and miniaturization of recent information terminal devices, it is becoming more difficult to secure a space to provide an antenna needed to receive a radio wave of TV broadcasting on an information terminal device side or a special connector connected to an external antenna. For example, many earphone antennas have been proposed by inventors and the like as an antenna to receive a radio wave of TV broadcasting. However, the size of diameter of a terminal for earphone needed for the earphone antenna is also an obstacle to further slim down the information terminal device.

Thus, many thin information terminal devices in recent years are provided with only a USB (Universal Serial Bus) terminal without having any earphone terminal. Such information terminal devices are charged from a host computer and various signals are transmitted between the host computer and the information terminal devices by using the USB terminal.

To solve the above problems, the inventors considered using the USB terminal always mounted on an information terminal device so as to be able to receive TV broadcasting. Then, the inventors tried various ideas and experiments. As a result, the inventors contrived an input/output apparatus capable of receiving a radio wave of TV broadcasting or the like without providing a terminal for earphone or a special connector for an external antenna.

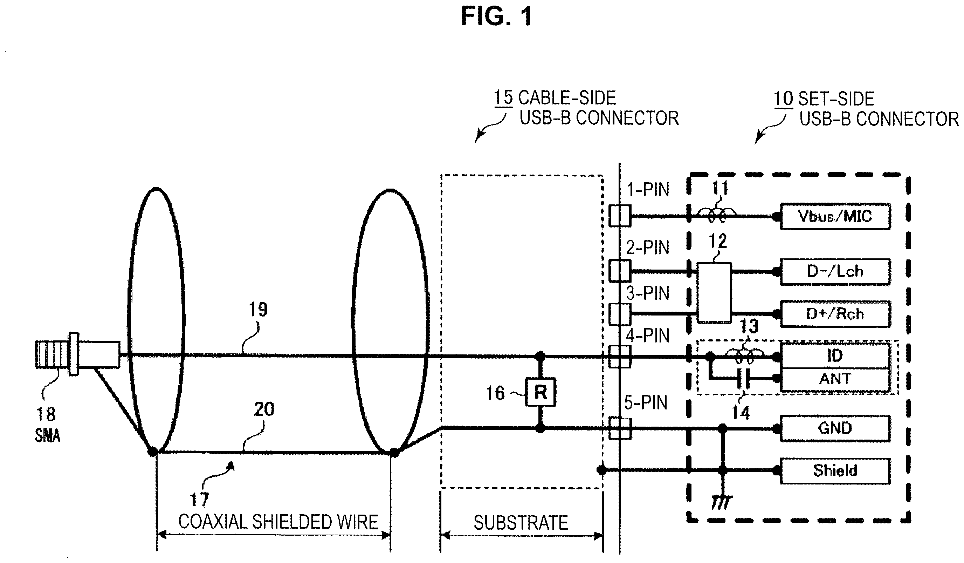

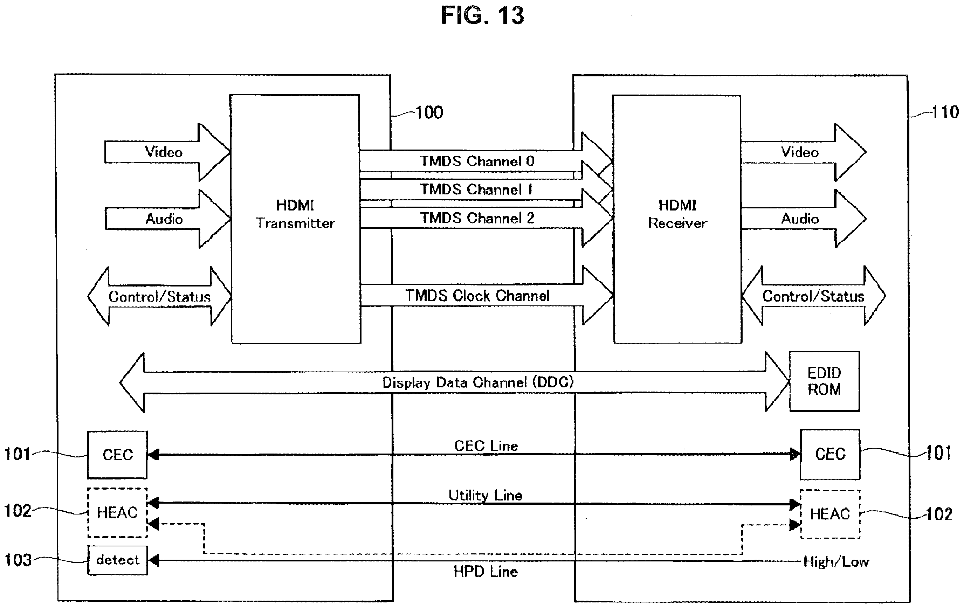

Hereinafter, an embodiment disclosed herein (hereinafter, called the "present example") will be described with reference to FIGS. 1 to 11 and the description will be provided in the following order. Though an input/output apparatus using the USB terminal will be described below, the present disclosure is not limited to the USB input/output apparatus. The present disclosure can be generally applied to an input/output apparatus including a standard information terminal based on a general-purpose interface standard illustrated in FIGS. 13 to 16.

### <1. Verification of Connection of USB-SMA Conversion Cable to External Antenna>

FIG. 1 is a diagram illustrating an example of an input/output apparatus of the present example. As illustrated in FIG. 1, a female USB connector for USB cable connection is provided on an information terminal device (hereinafter, also called a "set" or "set substrate") side. The USB connector provided on the set side will be called a "set-side USB-B connector 10" below.

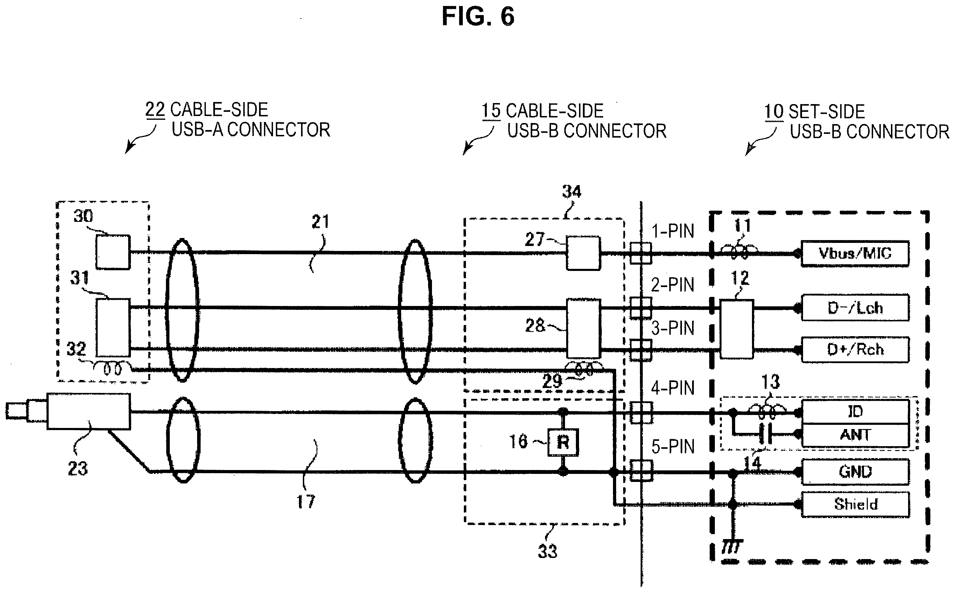

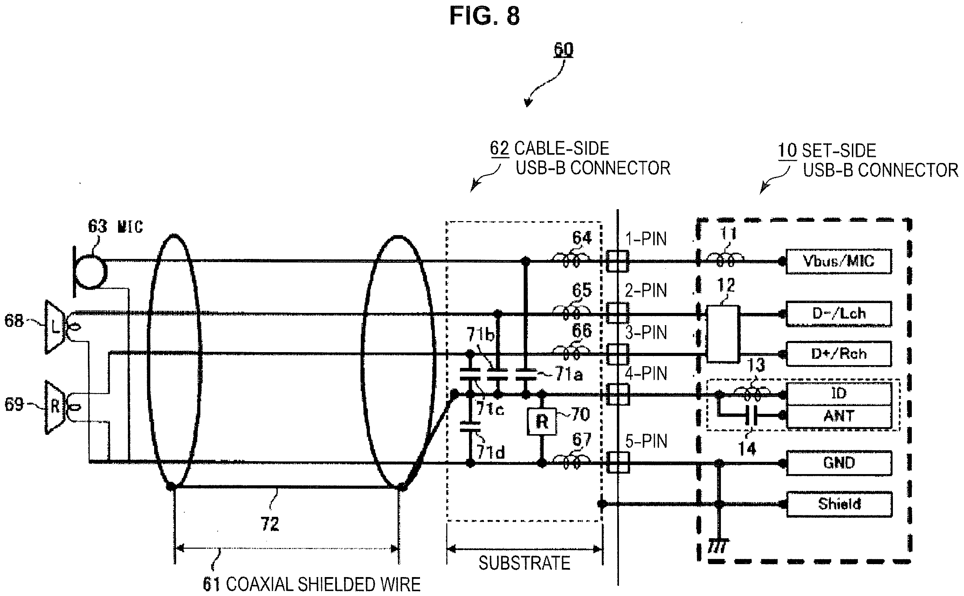

Then, a male USB connector is attached to one end of a coaxial shielded wire of an appropriate length an SMA (Sub Miniature Type A) connector is attached to the other end. Hereinafter, the male USB connector will be called a "cable-side USB-B connector 15" to distinguish from the set-side USB-B connector 10. The SMA connector is normally used as a measuring connector. The set-side USB-B connector 10 is a portion indicated by a thick dotted line in FIG. 1 and the cable-side USB-B connector 15 is a portion indicated by a thin dotted line in FIG. 1. Each connector is connected by 1-pin to 5-pin and fixed onto a substrate. This relation also applies to FIGS. 6 and 8 described later.

First, a general configuration of the USB connector will be described with reference to FIG. 1, and then, a specific configuration of a USB input/output apparatus in the present example will be described.

In general, the set-side USB-B connector 10 (female type) and the cable-side USB-B connector 15 (male type) each have five connection pins indicated by 1-pin to 5-pin and a shielding terminal. A µUSB-B connector is normally used as the set-side USB-B connector 10 and the cable-side USB-B connector 15.

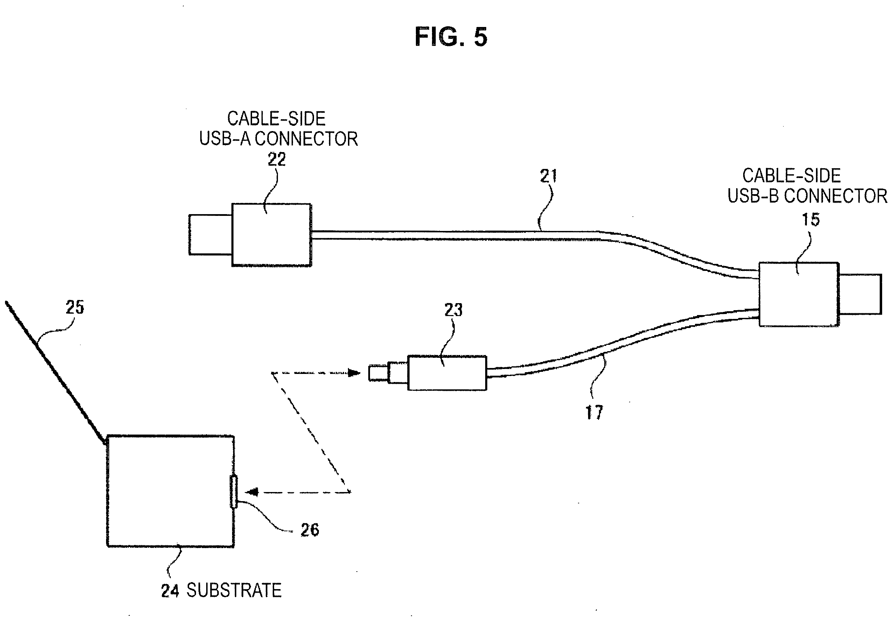

The B connector is a connector used generally on the set side and, by contrast, as will be described with reference to FIG. 5, an A-type USB connector capable of supplying power from a host computer side is normally used as a USB connector connected to the host computer side.

Incidentally, using the A-type or AB-type (connector used for both the host side and the set side) µUSB connector as a set-side USB connector has been considered in recent years, but the set-side USB connector is handled as the B type and the host side USB connector is handled as the A type.

As illustrated in FIG. 1, 1-pin of the set-side USB-B connector 10 is a Vbus/MIC terminal for voltage supply and power is fed from the host computer (not shown) side to the information terminal device (set) via 1-pin and also a voltage is supplied to an earphone microphone or the like connected to the set. A ferrite bead 11 for high-frequency cutoff is connected in series to a line to which 1-pin of the set-side USB-B connector 10 is connected. Hereinafter, the ferrite bead may be abbreviated simply as "FB".

2-pin and 3-pin of the set-side USB-B connector 10 are terminals of a signal line related to transmission and reception of a differential signal, and when an audio signal is input into these terminals, 2-pin (D- terminal) functions as a terminal of an L channel and 3-pin (D+ terminal) functions as a terminal of an R channel. A common mode choke 12 is connected to a line to which 2-pin and 3-pin used for differential are connected. Then, high-frequency signals are cut off and only an audio signal is passed by the common mode choke 12. In the following description, the high-frequency signal may also be called an "RF signal" or "antenna signal".

4-pin of the set-side USB-B connector 10 is an ID terminal (ID stands for Identification, also called an "identification terminal") to identify the type of an inserted plug and the use to which the plug is applied.

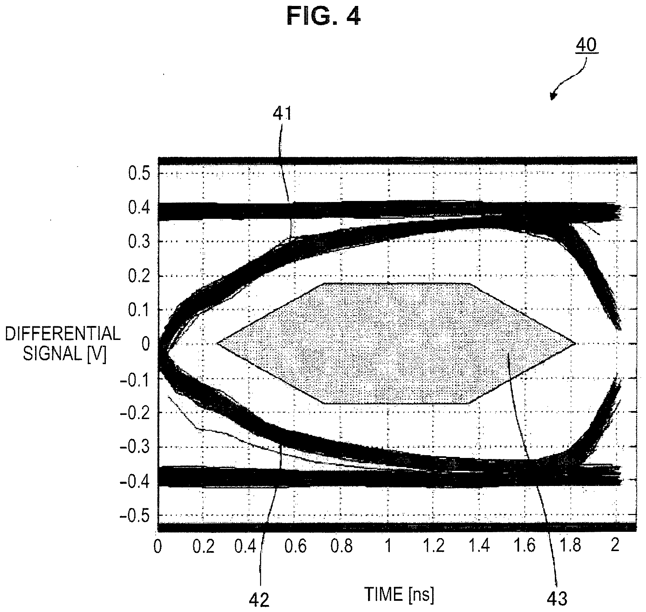

In the set-side USB-B connector 10 in the present example, as illustrated in FIG. 1, 4-pin used as the ID terminal is used as an antenna terminal to receive TV broadcasting or the like. Thus, a capacitor 14 of about 1,000 pF is connected in series to a line to which 4-pin is connected and an antenna signal supplied to 4-pin via the capacitor 14 is supplied to a tuner circuit (not illustrated) (ANT in FIG. 1) in the set.

4-pin of the set-side USB-B connector 10 is also a pin used as a normal ID terminal. High-frequency signals of television and the like are not needed to realize the function as a normal ID terminal, and an FB 13 as a high-frequency cutoff element is connected in parallel with the capacitor 14 to the line to which 4-pin is connected to remove such high-frequency signals. Accordingly, an ID signal from which high-frequency antenna signals such as a television signal have been removed is output to an ID identification circuit (not illustrated) on the set side.

Incidentally, 5-pin of the set-side USB-B connector 10 is a ground terminal for grounding, and a line to which 5-pin is connected is connected and grounded to an external shield of the cable-side USB-B connector 15 and the set described later.

The USB-SMA conversion cable illustrated in FIG. 1 is, as described above, a so-called coaxial cable in which the male cable-side USB-B connector 15 is connected to a substrate provided at one end of a coaxial shielded wire 17. Like the set-side USB-B connector 10, a µUSB connector is used also for the cable-side USB-B connector 15 and, in addition to the B type, a µUSB connector of the A type or AB type may also be used.

A resistor 16 is connected between the ID terminal (4-pin) of the cable-side USB-B connector 15 and a ground line and a USB connector for which use is connected with the value of the resistor 16 and how a cable thereof is used can be recognized from the set side.

Currently, the resistor 16 is defined only for an earphone, but will also be used for other purposes other than the earphone in the future. However, whether power is supplied is recognized by, as will be described later, applying a voltage to a Vbus terminal and shorting 2-pin (D- terminal) and 3-pin (D+ terminal) to start charging.

An SMA connector 18 illustrated in FIG. 1 is a terminal to which an external antenna line or a cable from an antenna terminal of the home or the like is connected and is known generally as a measuring connector. The characteristic impedance of the SMA connector 18 is 50 Ω and the SMA connector 18 has long been used for wireless communication devices of mainly microwaves. We performed an experiment of receiving a broadcast wave such as a television signal on the set side using a USB-SMA conversion cable illustrated in FIG. 1.

More specifically, as illustrated in FIG. 1, a core wire 19 as an inner conductor of the coaxial shielded wire 17 cut into lengths of about 10 cm is connected to a line of 4-pin of the cable-side USB-B connector 15. In addition, a metal shield 20 as an outer conductor of the coaxial shielded wire 17 is connected to a line of 5-pin of the cable-side USB-B connector 15. The USB-SMA conversion cable is produced by leaving 1-pin to 3-pin of the cable-side USB-B connector 15 open with nothing being connected.

### <2. Specific Example of USB-SMA Conversion Cable>

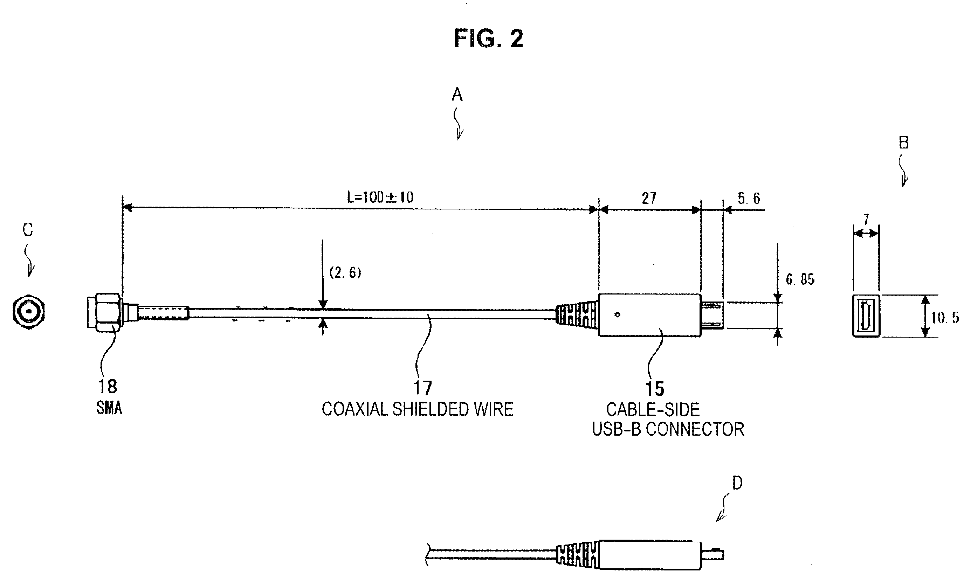

FIG. 2 illustrates samples of the above USB-SMA conversion cable. FIG. 2A is a plan view viewed from above, FIG. 2B is a sectional view of the cable-side USB-B connector 15, FIG. 2C is a sectional view of the SMA connector 18, and FIG. 2D is a front view. The dimension of each figure is based on the standard of the USB connector and SMA connector. In FIG. 2, the same reference signs are assigned to the same members as those of FIG. 1.

As illustrated in FIG. 2, the coaxial shielded wire 17 of about 10 cm in length and 2.6 mm in diameter is used as a sample of the produced USB-SMA conversion cable. As illustrated in FIG. 2B, the narrower side of the cable-side USB-B connector 15 having a rectangular section has a width of 7 mm, which is suitable as a connection terminal of a mobile phone or the like for which further slimming down in the future is expected.

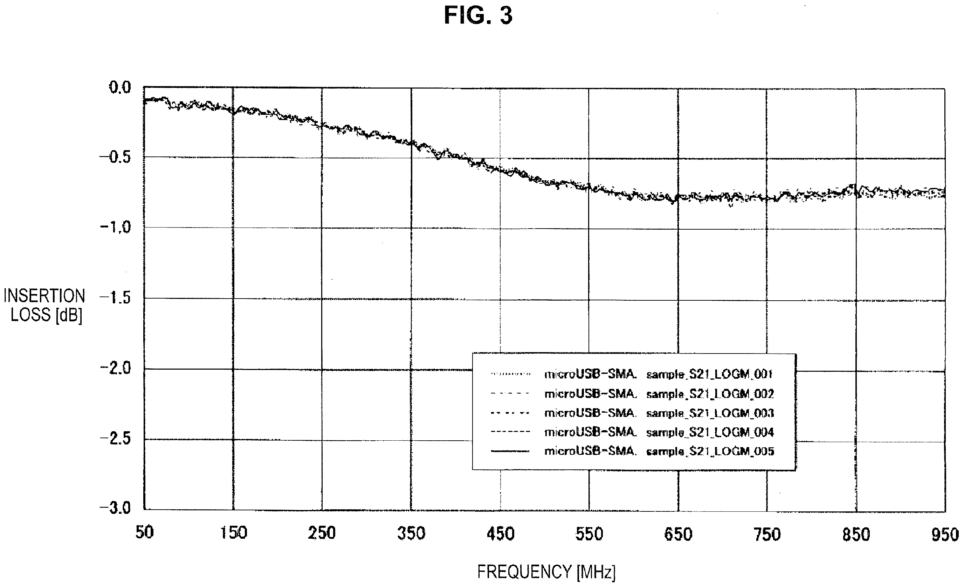

Five samples of the USB-SMA conversion cable illustrated in FIG. 2 are successively connected to the set-side USB-B connector 10 to examine transmission characteristics of a high-frequency signal such as a television wave. FIG. 3 is a diagram obtained by plotting the result.

In the Japanese television broadcasting, the VHF band of 90 to 108 MHz (1 to 3 ch) and 170 to 222 MHz (4 to 12 ch) and the UHF band of 470 to 770 MHz (13 to 62 ch) are used. Incidentally, the VHF band may be divided to call 90 to 108 MHz as the VHF-L (low) band and 170 to 222 MHz as the VHF-H (high) band.

Viewing FIG. 3 shows that pass characteristics of high-frequency signals in all bands of TV broadcasting yield substantially the same results for five samples of the USB-SMA conversion cable. That is, insertion losses of five samples of the USB-SMA conversion cable are 1 dB or less in all frequency bands of the FM band (70 to 90 MHz), the VHF band, and the UHF band, which shows that transmission degradation is small. The above result shows that practically no problem is caused if the ID terminal of an ordinary USB cable is used for reception of an antenna signal of television or the like.

### <3. Verification of Maintenance of USB Function>

We also verified whether the original USB function is maintained, in other words, whether the USB function is not degraded by using the ID terminals of the set-side USB-B connector 10 and the cable-side USB-B connector 15 for antenna transmission. FIG. 4 is a diagram illustrating an eye pattern 40 to examine whether the USB function is maintained.

The eye pattern 40 is also called an eye diagram or an eye opening ratio and is created by sampling and superimposing the transition of a signal waveform many times and graphically showing the result. The horizontal axis represents the time and the vertical axis represents the voltage. If the eye pattern 40 is viewed and a plurality of signal waveforms is superimposed at the same position (timing and voltage), the waveform is considered to be a high-quality waveform, and conversely, if positions (timing and voltage) of signal waveforms are shifted, the waveform is considered to be a low-quality waveform. It is also known that a waveform of degraded transmission characteristics has a hexagonal shape (template 43) in the center that is thin and flat and the area thereof is small.

In the standard satisfying conditions for the USB 2.0 function, differential signals 41 and 42 passing signal lines of D+ = 0.4 V and D- = -0.4 V and having a phase difference of 180° are simultaneously displayed and the waveform of the differential signals is required to surround the hexagonal template 43 in the displayed eye pattern. Incidentally, in the standard of USB 2.0, the clock of USB signal transmission is 480 Mbps.

The test is called an eye pattern test (or an eye diagram test) because the relationship between the signal lines and the template is similar to the shape of an open human eye.

It can be seen from FIG. 4 that the differential signals 41 and 42 propagated through the line to which 2-pin and 3-pin are connected are positioned between parallel lines of D+ = 0.4 V and D- = -0.4 V, and further, the hexagonal template 43 is positioned inside a region surrounded by these two differential signals 41 and 42. That is, FIG. 4 shows that if 4-pin of the USB terminal is used as an antenna, the eye pattern test is passed, in other words, the USB standard is satisfied. From the above, it is clear that the USB function is maintained even if a dipole antenna or an outdoor antenna is connected to the SMA connector of the USB-SMA conversion cable illustrated in FIG. 2.

### <4. Connection Example of Coaxial Cable and USB Cable>

FIGS. 5 and 6 illustrate an embodiment in which two cables, a coaxial cable similar to the USB-SMA conversion cable illustrated in FIG. 1 and an ordinary USB cable, are connected to the input/output apparatus. FIG. 5 is a schematic configuration diagram and FIG. 6 is a diagram illustrating connection relationships thereof in detail. Incidentally, FIG. 5 illustrates an example in which, instead of the SMA connector 18 (see FIG. 1), a double-pole plug 23 whose diameter is 3.5 mm is connected to the other end of the coaxial cable 17. The double-pole plug 23 is called a "Φ3.5 double-pole plug". Instead of the double-pole plug 23, the SMA connector 18 or an F connector normally used in the television may also be used. Hereinafter, the cable that receives a broadcast wave such as the television signal illustrated in FIGS. 1, 2, 5, and 6 will be simply called "coaxial cable" to distinguish from the USB cable.

In the connection example illustrated in FIG. 5, in addition to the coaxial cable (coaxial shielded wire) 17, a USB cable 21 is connected to the cable-side USB-B connector 15. Then, a cable-side USB-A connector 22 to connect to the host computer side is connected to the other end of the USB cable 21. In addition to power being supplied from the host computer (not illustrated) side to the set side, various information signals including an audio signal are supplied through the USB cable 21.

Incidentally, the F connector normally used for input of the television is connected to the other end of the coaxial cable 17 to connect to an antenna terminal in the home.

However, there is also a desire to receive a TV broadcast wave by using a dedicated retractable rod antenna when using an information terminal device. Thus, the case of connecting and using the above-described double-pole plug 23 or other small coaxial connectors, instead of the SMA connector 18, is expected to increase in the future.

The double-pole plug 23 is used by being inserted into a double-pole jack 26 as a connector of a substrate 24 of an antenna unit having a rod antenna 25. The double-pole jack 26 of the substrate 24 is called a "Φ3.5 double-pole jack". By connecting the double-pole plug 23 and the double-pole jack 26, an information terminal device (set) and an antenna for television signal reception can be directly connected. Thus, even if the USB cable 21 is connected, noise from the host computer side is resisted so that a broadcast wave can be received with stability. In addition, the antenna unit is a separate body and so can advantageously be carried.

FIG. 6 is a detailed view illustrating details of the connection relationship in FIG. 5 at a pin level of a USB input/output terminal. The same reference signs are assigned to the same members as those in FIG. 1. The configuration of the set-side USB-B connector 10 is the same as that illustrated in FIG. 1 and thus, the description thereof is omitted.

As illustrated in FIG. 6, the cable-side USB-B connector 15 is connected to the set-side USB-B connector 10 as a USB input/output apparatus. In the example of FIG. 1, as described above, only the coaxial cable (USB-SMA conversion cable) 17 is connected to the cable-side USB-B connector 15.

In the connection example illustrated in FIG. 6, in addition to the coaxial cable 17 to which the double-pole plug 23 is connected, the ordinary USB cable 21 is connected to one end of the cable-side USB-B connector 15. As illustrated in FIG. 5, the B-type cable-side USB-B connector 15 is connected to one end of the USB cable 21, and the A-type cable-side USB-A connector 22 to connect to a host computer is connected to the other end thereof. The FB 27 for high-frequency cutoff is connected on the set side to 1-pin to which the power supply line of the USB cable 21 is connected, and also, the FB 30 for high-frequency cutoff is similarly connected thereto on the host side. The FBs 27 and 30 are ferrite beads (FBs) capable of maintaining high-frequency characteristics even if a current flows, and characteristics thereof are different from those of FBs 29 and 32 connected to a ground line to be described later.

In addition, common mode chokes 28 and 31 are connected to 2-pin and 3-pin to which the differential signal line of the USB cable 21 is connected to the set side and the host side respectively. Furthermore, the FB 29 is connected to the ground line of the USB cable 21 on the set side, and the FB 32 is connected thereto on the host side. The FBs 29 and 32 inserted into the ground line have a magnetic material arranged around a coil to create a state of high impedance at high frequencies, that is, a state of large high-frequency losses. Then, a high-frequency current is converted into heat to remove the high-frequency current.

However, under the assumption that USB characteristics and RF characteristics of the coaxial cable 17 are maintained, the FB 30 and the common mode choke 31 on the host side and the FB 32 connected to the ground line may be omitted if the influence of power supply noise is small in terms of characteristics of the USB cable 21.

Incidentally, when the substrate to which the cable-side USB-B connector 15 is connected is used as a common substrate, the substrate and the connector should be separated as far apart as possible in consideration of prevention of mutual interference. Here, a first substrate 33 to which the coaxial cable 17 is connected and a second substrate 34 to which the USB cable 21 is connected are separate from each other. The first substrate 33 becomes a first connection portion, and the second substrate 34 becomes a second connection portion. Crosstalk between a signal on the USB cable 21 side and a signal on the coaxial cable 17 side can be eliminated by the separation so that a broadcast wave can be received with more stability on the coaxial cable side.

Thus, by attaching both of the USB cable 21 and the coaxial cable 17 to the cable-side USB-B connector 15, communication with the host computer and charging using the USB cable 21 and reception of a broadcast wave from an antenna unit using the coaxial cable 17 become possible simultaneously.

### <5. Application Example to Earphone Antenna>

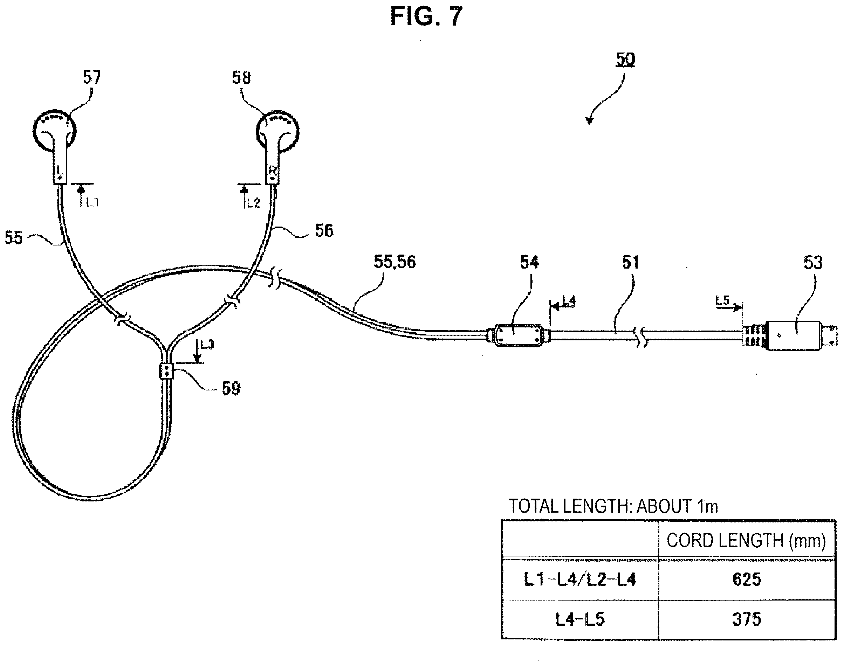

FIG. 7 is a diagram illustrating an earphone antenna 50 of about 1 m in total length produced by connecting a coaxial shielded wire 51 of 37.5 cm in length and earphone cords 55 and 56 of 62.5 cm in length.

The earphone antenna 50 is a kind of monopole antenna and configures an antenna capable of receiving a radio wave in the VHF band for TV broadcasting with the length of all of the coaxial shielded wire 51 and the earphone cords 55 and 56, and configures an antenna capable of receiving a radio wave in the UHF band for TV broadcasting by the portion of the coaxial shielded wire 51.

A male cable-side USB-B connector 53 attached to the coaxial shielded wire 51 to connected to a set is the same as the cable-side USB-B connector 15 of FIG. 1, but has, as will be described with reference to FIG. 8, a different connection configuration of 1-pin to 5-pin.

On the other hand, the connector connected to earphone cords 55 and 56 is not the SMA connector 18 illustrated in FIG. 2, but a connection portion 54 to connect the ordinary earphone cord 55 and 56 and the coaxial shielded wire 51 via a substrate, and the connection portion 54 is molded from resin. The connection portion 54 becomes a boundary between the earphone cords 55 and 56 and the coaxial shielded wire 51. The earphone cords 55 and 56 are integrally connected up to a fixing portion 59, but are separated in the fixing portion 59 to be connected to an L-side earphone 57 and an R-side earphone 58 respectively.

Incidentally, in the present example, a resin mold via a substrate is formed for the connection of the coaxial shielded wire 51 and the earphone cords 55 and 56, but instead, the connection of an earphone jack and an earphone plug may also be configured.

The total length of the earphone antenna 50 is set to about 1 m, and the length of the coaxial shielded wire 51 is set to 37.5 cm. Here, the total length of the earphone antenna is decided in consideration of the fact that the frequency further decreases when the antenna is mounted on a human body and used. That is, in the earphone antenna 50, the length of the coaxial shielded wire is adjusted to 37.5 cm, which is about 1/4 the wavelength (λ/4) of 200 MHz, so that both of the VHF-H band and the UHF band of TV broadcasting can be received. In addition, since the UHF band (440 to 770 MHz) corresponds to a high-frequency band of about 200 MHz, a radio wave of TV broadcasting in the UHF band can also be received by the earphone antenna 50.

FIG. 8 is a diagram illustrating a specific connection relationship of an earphone antenna 60, which is the same as the earphone antenna 50 illustrated in FIG. 7. A cable-side USB-B connector 62 connected to a coaxial shielded wire 61 is a male connector and is connected to the female set-side USB-B connector 10. Incidentally, the female set-side USB-B connector 10 attached to the set substrate side is the same as the connector illustrated in FIG. 1 and so the description thereof is omitted.

In the example of FIG. 8, the length of the coaxial shielded wire 61 is set to 37.5 cm, which is the same length as that of the coaxial shielded wire 51 in FIG. 7. The cable-side USB-B connector 62 provided on the substrate on the coaxial shielded wire 61 side is different from the cable-side USB-B connector 15 of FIG. 1 in a line configuration connected to each terminal (1-pin to 5-pin) of the cable-side USB-B connector 62.

The male cable-side USB-B connector 62 arranged on the substrate on the coaxial shielded wire 61 side is provided opposed to the female set-side USB-B connector 10 arranged on the set substrate side. 1-pin of the cable-side USB-B connector 62 is a terminal for power supply and is connected to a microphone 63, and furthermore, an FB 64 to cut off high-frequency signals is connected in series to the line.

2-pin and 3-pin of the cable-side USB-B connector 62 are connected to a signal line that transmits R and L audio signals by differentials, and FBs 65 and 66 for high-frequency cutoff are also connected to the line. Furthermore, an FB 67 is connected to 5-pin as a ground line of the cable-side USB-B connector 62. Incidentally, to satisfy both of the ordinary USB cable transmission function and the antenna function of a high-frequency signal like a television signal, the DC resistance of the FB 67 inserted into the ground line is desirably 1 Ω or less.

Thus, it is preferable to set the value of resistance of the FB 67 to 1 Ω or less, but if it should be impossible to achieve audio isolation with the value of 1 Ω, the value of the FB 67 may be set to 0 Ω for use. That is, though antenna characteristics are degraded, the ID terminal of 4-pin can be used as an antenna terminal without the FB 67. In addition, if slight degradation of high band characteristics of UHF is permitted, the function as an antenna terminal can be maintained without inserting a capacitor 71d between the line of the ID terminal and the ground line.

In addition, lines of 1-pin, 2-pin, and 3-pin of the cable-side USB-B connector 62 are connected to the ground line (line of 5-pin) via the microphone 63 and L and R earphones 68 and 69.

Particularly in the earphone antenna 60 of the present example, as will be described later, the fact that a metal shield 72 as an outer conductor of the coaxial shielded wire 61 is connected to the ID terminal (4-pin) of the cable-side USB-B connector 62 has an important meaning. As illustrated in FIG. 6, the metal shield 72 connected to the ID terminal is a shielding line that is different from the ground line.

In addition, when the male cable-side USB-B connector 62 is inserted into the female set-side USB-B connector 10, it is necessary to discriminate (detect) whether an antenna capable of receiving a radio wave of TV broadcasting or the like is inserted. Thus, a resistor 70 is inserted between the line to which the ID terminal (4-pin) of the cable-side USB-B connector 62 and the ground line to which 5-pin is connected. Different values of resistance are set as the value of resistance of the resistor 70 depending on the type of the cable-side USB-B connector 62, in other words, for which purpose the connector is used. Therefore, by detecting the value (value of resistance) of the resistor 70, whether a USB connector having an antenna function of TV broadcasting or the like is inserted can be detected.

When a radio wave of TV broadcasting or the like is received by a conventional earphone antenna, generally a signal line constituting an R earphone cable and a signal line constituting an L earphone cable are each caused to function as an antenna line. In the earphone antenna, a radio wave is transmitted between the core wire of a coaxial cable and the ground line, and a transmitted antenna signal is input into a receiver of TV broadcasting or the like by a pin jack connector.

However, the transfer clock used for signal transfer in USB 2.0 is 480 Mbps and a clock signal operates between the signal line and the ground line, and thus, if the ground of a USB cable is used as an antenna of a television signal, the antenna is in a state in which the clock signal of 480 Mbps of USB is superimposed on an RF signal of television or the like. Therefore, when the USB cable is used as an antenna for TV broadcasting, the USB cable cannot be used for transmission of a high-frequency signal of TV broadcasting or the like if connected in the same way as a conventional earphone antenna. Incidentally, the clock of 480 Mbps in USB 2.0 corresponds to a frequency of 240 MHz, and thus, the band particularly affected adversely is the VHF-H band.

In consideration of the above problem of the earphone antenna, an earphone antenna of the present example has, as illustrated in FIG. 6, capacitors 71a to 71d to promote high-frequency connection inserted between a voltage line (1-pin), a signal line (2-pin, 3-pin), and a ground line (5-pin) and an ID line (4-pin). The value of the capacitors 71a to 71d is approximately 1,000 pF.

In addition, the FBs 64 to 67 are connected to the line to which 1-pin to 3-pin of the cable-side USB-B connector 62 is connected and the line to which 5-pin is connected, so that an antenna signal like a television signal does not enter the set-side USB-B connector 10 through these lines. That is, shielding at high frequencies is created.

In addition, since the earphone antenna 60 illustrated in FIG. 8 uses the line of the ID terminal for input of the antenna for TV broadcasting, no ferrite bead (FB) is connected to the ID line to which 4-pin is connected. In other words, while the FBs 64 to 66 are connected to the lines to which 1-pin to 3-pin of the cable-side USB-B connector 62 are connected and the ground line to which 5-pin is connected, no FB is connected to the line to which 4-pin is connected. That is, only the line of 4-pin is not shielded at high frequencies, and an antenna signal of television or the like is transmitted to the set side through this line.

Then, a radio wave of an antenna signal generated in each line immediately before these FBs 64 to 66 is actively superimposed on the ID line via the capacitors 71a to 71d. This means that the ID line (antenna terminal) and other lines are connected at high frequencies and are open in terms of DC. Therefore, when each line of the USB cable is used for signal transmission or the like, no adverse effect shows up.

Also, as described above, the resistor 70 is connected between the ID line to which 4-pin of the cable-side USB-B connector 62 is connected and the ground line. The value of resistance of the resistor 70 is normally high impedance (hundreds of kΩ), and thus, the ID line and the ground line are open at high frequencies and antenna characteristics are not affected by the ID line. Incidentally, to be noted is a case in which after the FBs 64 to 67 connected to each line other than the ID line pass, connection is established by a capacitor such as connection capacity and in this case, a high-frequency current flows to each terminal, which causes degradation of antenna characteristics.

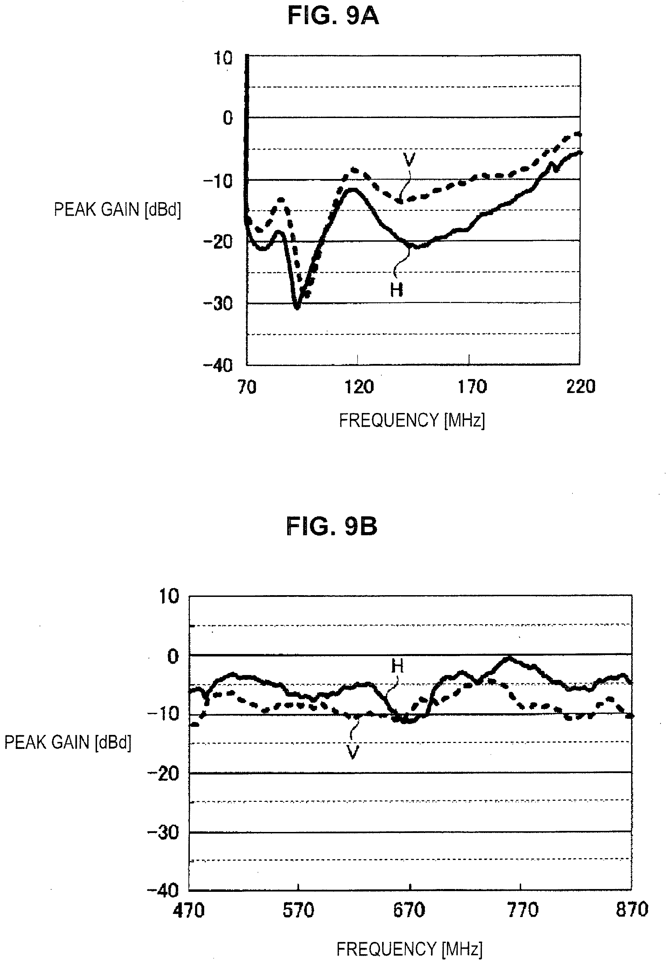

Next, based on Tables 1 and 2 and FIGS. 9A and 9B, frequency-gain characteristics of the earphone antenna described with reference to FIGS. 7 and 8 will be described. Table 1 and FIG. 9A show frequency-gain characteristics exhibited by the earphone antenna illustrated in FIG. 7 in the VHF band of TV broadcasting. In the VHF band of 190 to 220 MHz, as illustrated in Table 1 and FIG. 9A, gain characteristics of -10 dB or more are exhibited in vertical polarization and characteristics of -16 dB or more are exhibited in horizontal polarization.

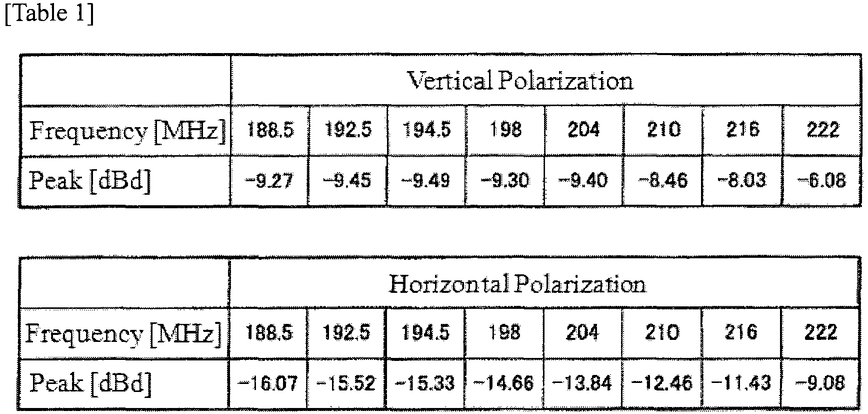

In addition, in the UHF band of 470 to 870 MHz, as illustrated in Table 2 and FIG. 9B, gain characteristics of -12 dB or more are exhibited in both of vertical polarization and horizontal polarization. These results show that the earphone antenna 60 illustrated in FIG. 8 functions adequately as an antenna of the VHF band and the UHF band of TV broadcasting. These results also mean that the earphone antenna is applicable as an antenna for multimedia broadcasting planned to be broadcast using the VHF band.

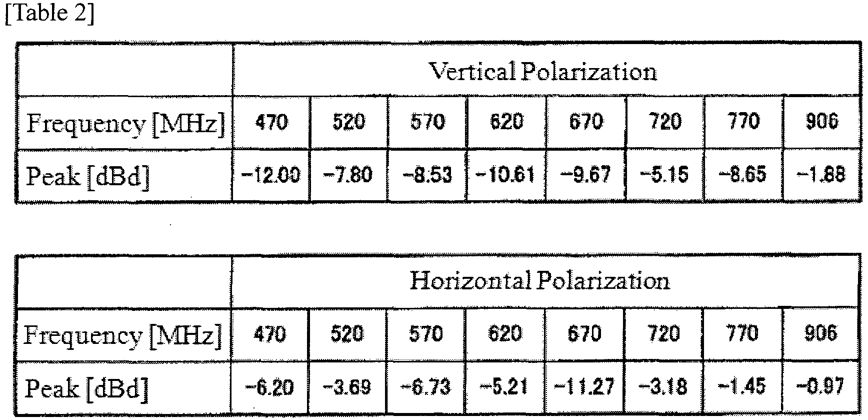

### <6. Substrate Configuration of USB Input/Output Apparatus to Obtain Pass Characteristic in GHz Band>

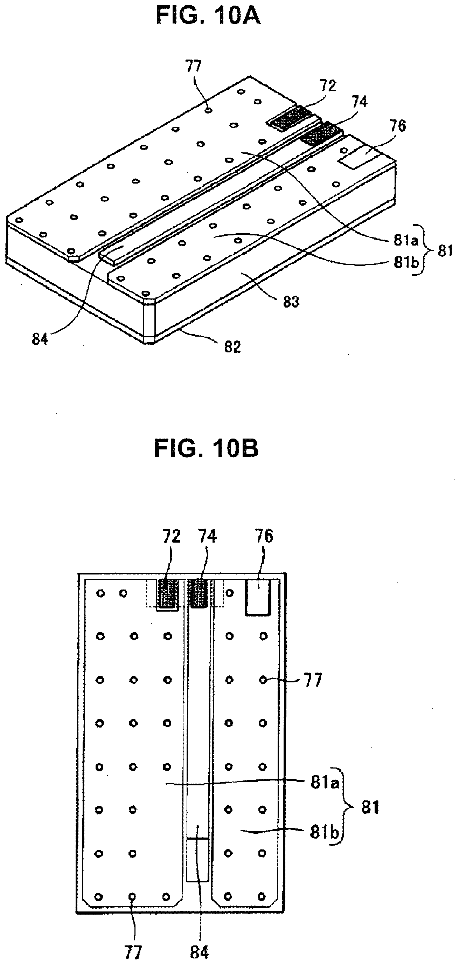

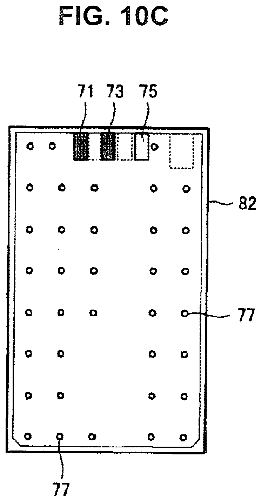

FIG. 10 is a diagram illustrating a substrate configuration to obtain pass characteristics in the GHz band by the input/output apparatus of the present disclosure. FIG. 10A is a perspective view of the whole substrate and FIGS. 10B and 10C are diagrams illustrating a physical relationship between two parallel earth faces (earth layers) arranged across a dielectric and a USB input/output terminal. The substrate is a µUSB plug substrate on which the coaxial shielded wire (coaxial cable) 17 and the cable-side USB-B connector 15 illustrated in FIG. 1 are implemented.

As illustrated in FIG. 10A, a dielectric 83 is arranged between an upper earth face 81 and a lower earth face 82. The earth face 81 and the earth face 82 are connected by a through-hole 77 and are maintained at the same potential. The upper earth face 81 is divided into an earth face 81a and an earth face 82b, and an electrode 84 to which the ID terminal (4-pin) of USB is connected is provided therebetween.

Electrodes to which 1-pin to 5-pin of the USB terminal are connected are provided on the respective earth faces 81a, 81b and 82. FIG. 10B illustrates electrodes provided on the earth face 81 of the top face (upper side), and FIG. 10C illustrates the positions of electrodes provided on the earth face 82 of the bottom face (lower side). FIGS. 10B and 10C are perspective views viewed from above.

As illustrated in FIG. 10B, a 2-pin (D- terminal) electrode 72, a 4-pin (ID terminal) electrode 74, and a shielding terminal 76 of the USB connector are arranged on the same plane as the earth faces 81a and 81b of the top face. Also, as illustrated in FIG. 10C, a 1-pin (power supply terminal) electrode 71, a 3-pin (D+ terminal) electrode 73, and a 5-pin (GND terminal) electrode 75 of the USB connector are arranged on the same plane as the earth face 82 of the bottom face. Incidentally, the shielding terminal 76 is directly connected to the earth face 81a, and the 5-pin (GND terminal) electrode 75 is directly connected to the earth face 82. In addition, the earth faces 81a and 81b of the top face and the earth face 82 of the bottom face are electrically connected by the through-hole 77.

Viewing the planar configuration of the upper earth face 81 illustrated in FIG. 10B and the planar configuration of the lower earth face 82 illustrated in FIG. 10C shows that both configurations are related as indicated by electrodes denoted by a solid line and the positions of electrodes denoted by a dotted line of the perspective views. That is, the 2-pin electrode 72 of the top face is arranged between the 1-pin electrode 71 and the 3-pin electrode 73 of the bottom face. In addition, the 4-pin electrode 74 of the top face is arranged between the 3-pin electrode 73 and the 5-pin electrode 75 of the bottom face. Furthermore, the shielding electrode 76 of the top face connected to the case is arranged on the outer side from the position of the 5-pin electrode 75 of the bottom face.

Incidentally, the mounting method of the USB connector may be the same as a conventional method, but the mounting method of the coaxial line in the present example useful for understanding the invention is devised. That is, the mounting method in the this example adopts a method by which a coating of the coaxial line is removed and a substrate is sandwiched between a core wire portion and a ground portion and then soldered. According to this method, an electromagnetic field is generated when a strip line is between a signal line and the ground at the bottom, and thus, pass characteristics of high frequencies can be maintained in good conditions.

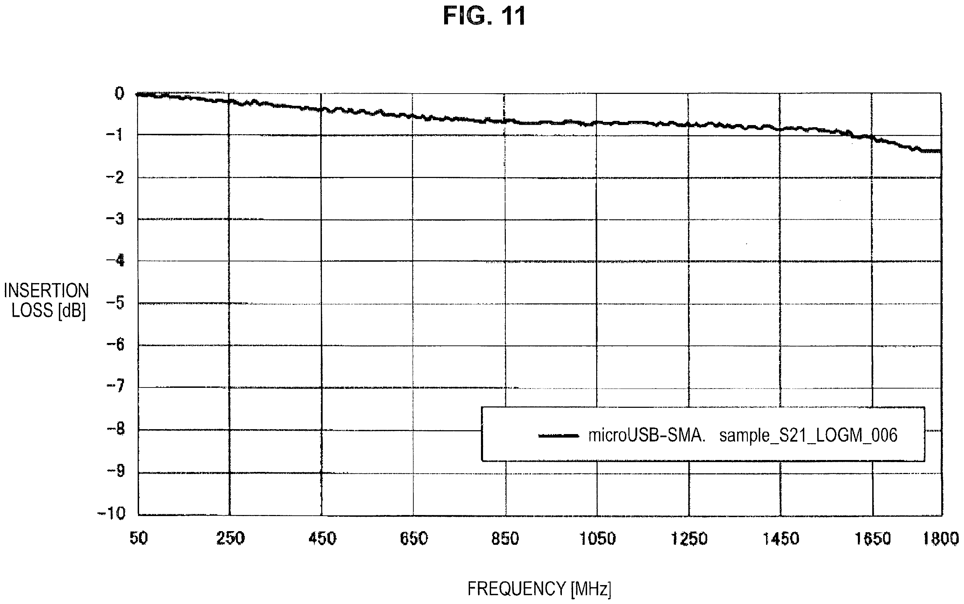

FIG. 11 illustrates a result of measurement of one sample of the USB-SMA conversion cable produced by adopting the substrate configuration illustrated in FIG. 10 for the µUSB plug substrate. In this experiment, pass characteristics were examined by connecting a semi-rigid cable to the ID terminal (4-pin) between µUSB connectors and taking transmission characteristics in the GHz band into consideration. FIG. 11 is a result of the above experiment. The semi-rigid cable means a cable that cannot be freely bent to transmit a high-frequency wave, that is, a "slightly rigid" cable and is generally used by those involved in high-frequency waves.

Comparison of FIGS. 3 and 11 shows that while valid characteristics are obtained only up to 950 MHz in FIG. 3, as a result of adopting the above substrate configuration, that frequency characteristics can be extended up to 1.8 GHz is verified in FIG. 11. That is, as illustrated in FIG. 11, the maximum transmission loss is 1.5 dB or less at 1.8 GHz, which shows that the USB-SMA conversion cable can be used without causing any problem at 1.8 GHz or less.

In the foregoing, the USB input/output apparatus has been described as an embodiment of the present disclosure. However, the present disclosure is not limited to the USB input/output apparatus and can also be applied to an input/output apparatus using, for example, an MHL (Mobile High-definition Link) interface other than USB.

Here, characteristics of the ID terminal of the above USB connector will be discussed. The USB connector is modified and expanded while upgrading quickly. Thus, as an actual problem, the actual standard is not defined in most cases. In the standard of USB-On-The-Go (USB-OTG) using the ID terminal, the ID terminal of a host (side) device is basically connected to GND via a resistance of 10Ω or less and the ID terminal of a device on the peripheral side (peripheral device) is OPEN or connected to GND via a resistance of 100 KΩ or more. Incidentally, in the actual operation, each company has specifications specific to the company for operation such as using each device depending on the value of resistance.

When connection target devices are connected alone, the connection is one-to-one (1 : 1), but a plurality of devices may be made connectable via a host device or a USB hub so that devices are connected by switching the host device or the USB hub. In this case, connections of multi-to-one, one-to-multi, and multi-to-multi become possible and switching thereof is controlled by the host device or the like.

These connection intended devices include, in addition to so-called host devices (information processing devices) such as PCs and so-called peripheral devices (information terminal devices) such as various mobile devices, USB chargers or the like to supply power. In addition, connection target devices also include various devices connected to other interface standards via a host device or a hub for expansion device connection.

In any case, the ID terminal of the USB connector shows a stable potential (constant voltage) allowing to discriminate the connection target device at that time excluding the time of change (change point, change timing) due to switching of the connection target device. In addition, it is only necessary to obtain the resolution for discrimination due to a potential change (displacement), and thus, the ID terminal is a terminal whose operation (here, the information discrimination) is resistant even if the potential slightly changes. In addition, the potential of the ID terminal changes only when the connection target device is switched, which leads to less change points or change frequency.

The ID terminal is also a terminal to switch the internal operation of an information terminal device including an input/output apparatus (or an input/output connector) having the ID terminal by knowing the type of the connection target device. Therefore, the ID terminal can be said to be a terminal to which an information signal called a so-called operation mode switching signal is supplied.

In the foregoing, the USB input/output apparatus has been described as an embodiment of the present disclosure. However, the present disclosure is not limited to the USB input/output apparatus and can also be applied to an input/output apparatus based on interface standards other than USB.

Here, characteristics of the ID terminal of the above-described USB connector will be discussed. Since the actual standard is modified and expanded while upgrading, it remains undefined, but, in the standard of USB-On-The-Go (USB-OTG) using the ID terminal, the ID terminal of a host (side) device is basically connected to GND via a resistance of 10 Ω or less. In addition, the ID terminal on the peripheral device side is OPEN or connected to GND via a resistance of 100 KΩ or more. In the actual operation, each company has specifications specific to the company for operation such as using each device depending on the value of resistance.

In any case, the ID terminal shows a stable potential (constant voltage) allowing to discriminate the connection target device at that time excluding the time of change (change point, change timing) due to switching of the connection target device.

In addition, it is only necessary to obtain the resolution for discrimination due to a potential change (displacement), and thus, the ID terminal is a terminal whose operation (here, the information discrimination) is resistant even if the potential slightly changes. In addition, the potential of the ID terminal changes only when the connection target device is switched, which leads to less change points (change frequency). Therefore, the ID terminal is a terminal that is extremely less likely (it does not almost appear) to be superimposed with a frequency range of the received signal in frequency even when a frequency received by an antenna is low.

The ID terminal is also a terminal to switch the internal operation of an information terminal device including an input/output apparatus (or an input/output connector) having the ID terminal by knowing the type of the connection target. Therefore, the ID terminal can be said to be an information terminal for an information signal that can be called a so-called operation mode switching signal.

Furthermore, the terminals of the USB (interface) standard are roughly classified to compare a type of a terminal, such as the ID terminal, as an α type, a type of a terminal, such as the D- terminal or the D+ terminal operating at a predetermined frequency, as a β type, and a terminal of a type related to power supply, such as the power supply terminal or the GND terminal, as a γ type.

Of these terminals, the use for both of the γ-type terminal related to power supply and the antenna terminal is an area that has also been discussed in Patent Literature 1 described above. The γ-type terminal is a terminal that is most stable in terms of potential because the γ-type terminal does not change in potential (displacement) when taking the original function thereof into consideration. Therefore, considering this alone, the γ-type terminal can be said to be a terminal that are most suitable for the combined use as the antenna terminal.

However, conversely, the γ-type terminal is a terminal that does not want to be change at all, and for example, the α-type terminal is suitable when a received signal received as the antenna becomes power noise and there is a concern that an operation of the information terminal device becomes unstable.

This is because the α-type terminal is an information terminal whose information content is discriminated by potential, and thus, it is easily designed to enable information discrimination even when the potential slightly changes. In addition to this point, the α-type terminal easily maintains a stable potential, except for the change points, and the displacement points are small, and thus, the influence of the received signal by the antenna is small (it is not almost affected).

Next, the use for both of the β-type terminal operating at a predetermined frequency and the antenna terminal is an area that has also been discussed in Patent Literature 2 described above. The β-type terminal is a type having the largest number of kinds or terminals in the normal interface standard, and if possible to a combined antenna terminal, the β-type terminal is a terminal of a type that is most easy to use.

In particular, in the interface standard handling only low-speed (low-frequency) information signals, interference (mutual influence) between received signals of higher reception frequencies from an antenna hardly occurs, and thus, it is easy to use the β-type terminal. However, if intending to broaden the reception frequency, the α-type terminal is desirable.

This is because the α-type terminal, as described above, has small displacement points and easily maintains a stable potential, except for the change points, and thus, interference of the received signals by the antenna is small (it is not almost affected).

Considering the above, the application to an input/output apparatus based on interface standards other than USB is taken into consideration. Similar to the USB standard, as general-purpose (or becoming-general-purpose) interface standards, there are interface standards such as, for example, MHL (Mobile High-definition Link), HDMI (High-Definition Multimedia Interface), Thunderbolt (Light peak), and Display port.

### <7. Function Comparison between USB Terminal and MHL Terminal>

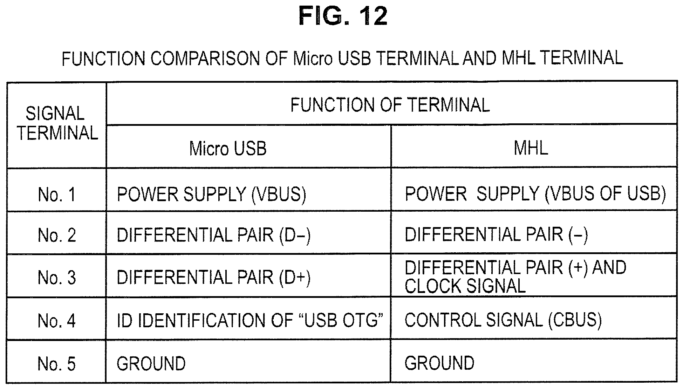

FIG. 12 is a diagram illustrating the functions of the µUSB terminal and the MHL terminal in comparison. MHL illustrated in FIG. 12 is a standard that uses a signal line of USB for transmission of digital image signals, and an MHL terminal assumes a combined use of a USB connector. Therefore, the MHL terminal has a control signal (CBUS: Card Bus Slot USB) terminal directly corresponding to the ID terminal of the µUSB standard, as the α-type terminal, and can use the CBUS terminal as a combined antenna terminal.

In MHL, the CBUS terminal is used for transmitting a control signal of a solid wire. That is, CBUS is used to set and control the output apparatus side (source) and the receiving apparatus side (sink) in a user usage environment of various audio/visual devices. For example, CBUS is replaced by the DDC (Display Data Chanel) function in general DVI (Digital Visual Interface) connection. In addition, CBUS is also used as an MHL sideband channel (MSC) realizing the control function between the source and sink.

Thus, the CBUS terminal is a terminal for an information signal that can be called an operation mode switching signal. That is, in the interface standard of the MHL standard, only by changing an internal operation of an information terminal apparatus including an input/output apparatus (or an input/output connector) using the same terminal for USB connector, the information terminal apparatus can be made to support the MHL standard.

### <8. System Configuration Compliant with HDMI Standard>

FIG. 13 is a diagram illustrating a system configuration example (connection example) compliant with the HDMI standard. HDMI stands for High-Definition Multimedia Interface and is the standard of the communication interface to transmit video and audio in the form of digital signals. In the system compliant with the HDMI standard, basically, a source device (a master device, a host device) 100 and a sink device (a slave device, a peripheral device) 110 are connected.

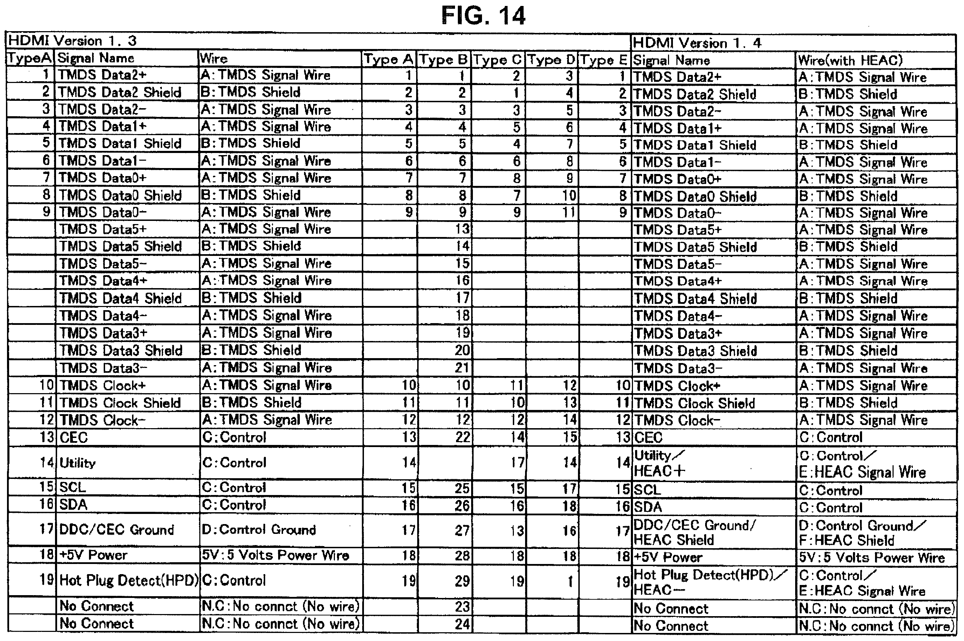

As the type of the connector compliant with the HDMI standard, at the present time (described as HDMI Version 1.4 or lower or "HDMI-V1.4"), five types of types A to E are defined as illustrated in FIG. 14. The same signal function names (signal names) are connected to match with one another as illustrated in FIG. 13.

Among the terminals illustrated in FIG. 13, terminals such as a CEC (Consumer Electronics Control) terminal 101, a Utility terminal 102 (at the point of HDMI-V1.3, a terminal having been Reserved), and a hot plug detection (HPD) terminal 103 are information terminals for information that can be called a so-called operation mode switching signal. Therefore, the terminals are the α-type terminals described above, and thus, can be candidates as a combined antenna input terminal.

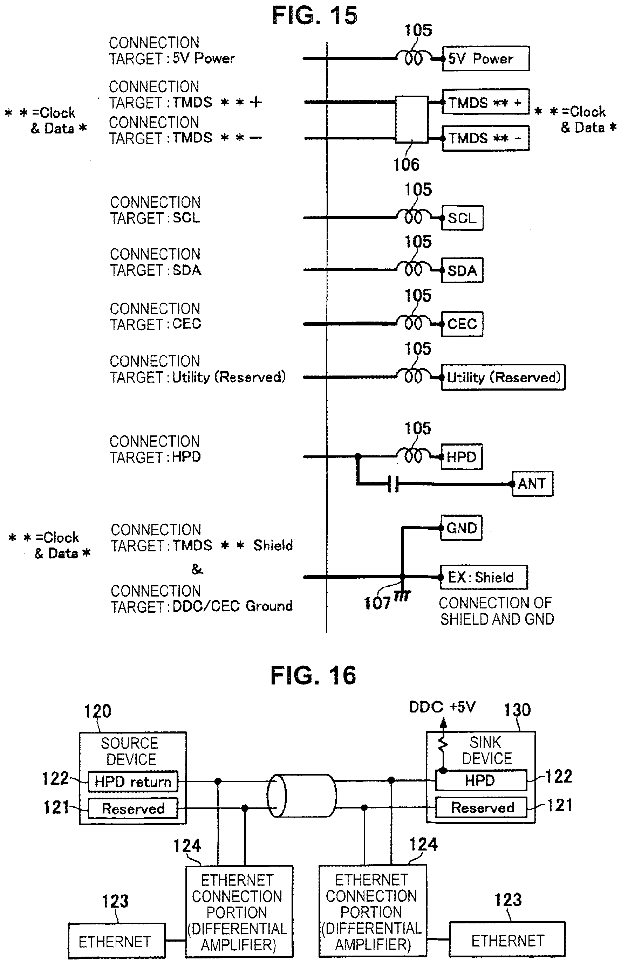

Next, the configuration of the connector compliant with the HDMI standard will be described with reference to FIG. 15. Here, for convenience of description, an input/output connector using the HPD terminal as the combined antenna input terminal to support the HDMI cable applying with up to HDMI-V1.3 will be described.

As illustrated in FIG. 15, like the set-side USB-B connector 10 illustrated in FIGS. 1 and 6, ferrite beads 105 for high-frequency cutoff are connected to series to various single signals. In addition, common mode chokes 106 are connected to various differential signals. In addition, various GND or shield signals are collectively grounded 107.

By the way, even in the DVI standard, the Display port standard and the Thunderbolt (Light peak) standard, the terminal such as HPD is an information terminal of information that can be called a so-called operation mode switching signal, and as the above-described α-type terminal, the terminal can be used as the combined antenna input terminal.

Here, the HPD signal (hot plug detection signal) commonly employed in the various interface standards is a signal designed such that the source device (the master device, the host device) detects whether the sink device (the slave device, the peripheral device) is connected and the signal can be immediately set according to the capability of the sink device.

In many cases, the source device can be implemented with a simple configuration in which the sink device performs loop-back on a high-level signal by using 5V power supplied to the connector by the source device. Since the HPD signal is basically a level signal (stable constant potential signal), the HPD signal is ideal as the α-type terminal and is adopted in many interface standards. In addition, the support of conversion cables or conversion adapters among the respective interface standards is also widespread, and thus, there is an advantage that is easy to use.

By the way, due to the expansion of the respective interface standards, a case that involves other interface standards (upward compatibility) can be considered. That is, in some cases, the α-type terminal such as the ID terminal or the HPD terminal is also used as other information terminal in the involved interface standards.

In such a case, that is, in a case where the combined (involved) information terminal handles only an information signal of a frequency sufficiently lower than a reception frequency of a received signal as an antenna input terminal (case of the γ-type terminal handling an information signal of a low frequency), there is no particular problem even when the information terminal is also used as the antenna input terminal. It is obvious that if the information terminal involved as the standard is the same α-type terminal, it does not cause any problem.

Incidentally, in the HDMI standard, when upgrading the HDMI-V1.3 to the HDMI-V1.4, the type-D and type-E connectors illustrated in FIG. 14 were added and also the transmission of the Ethernet (registered trademark) standard was supported. This standard is called HEAC (HDMI with Ethernet and Audio Return Channel, commonly known as e-HDMI), and an HPD terminal has been used for this purpose. Being paired in this case is the Reserved terminal so far, and due to the use thereof, the terminal is called a Utility terminal.

FIG. 16 is a diagram illustrating a configuration example at the time of HEAC compliant with the HDMI standard. As illustrated in FIG. 16, the configuration is the same as that illustrated in FIG. 13 in that a source device (a master device, a host device) 120 and a sink device (a slave device, a peripheral device) 130 are connected. Here, in the upgraded HDMI-V1.4, the Reserved (Utility) terminal 121 and the HPD terminal 122 can be LAN-connected to the Ethernet 123 through an Ethernet connection portion 124 by a differential signal. Furthermore, whether to select the standard or the high speed and whether to select the provision of the HEAC can be performed.

That is, the HDMI-V1.4, the function of the Ethernet 123 is included, and the HPD terminal becomes the above-described β type terminal. Therefore, it is necessary to use and operate the reception frequency in a range that does not overlap the frequency of the Ethernet 123 and to perform switching such that use timings do not overlap each other. In addition, for example, instead of the support of the Ethernet standard (instead of type D), the HPD terminal can be applied by preparing a connector such as a cable type F being an antenna terminal.

Next, a CEC (Consumer Electronics Control) terminal illustrated in FIG. 15 is also the same as described above. Like the HPD terminal, the CEC terminal is an information terminal to switch an internal operation of an information device and is a candidate of a combined antenna input terminal.

The CEC terminal was initially a terminal to transmit and receive a simple level signal (device control signal), and in the HDMI-V1.2 or higher, has been used to improve the operability between devices HDMI-connected to a home theater system as a device control signal and a control protocol.

In addition, in CEC terminals, mutual control can be performed by employing a unique method between products of the same manufacturer. In the selection by the CEC signal, a pair with the SDA terminal (see FIG. 15) may be used for communication, and a CEC terminal alone may be used for two-way communication.

Therefore, the CEC terminal is used as the combined antenna input terminal by using and operating the frequency in the pair communication and solo two-way communication and the reception frequency by the antenna reception in a range that does not overlap each other and performing switching such that use timings do not overlap each other.

In addition, as illustrated in FIG. 16, the case of the Reserved (Utility) terminal 121 is used in pairs with the above-described HPD terminal 122. In addition, it can be applied by using and operating in a range in which the reception frequency does not overlap the frequency of the Ethernet 123, performing switching such that the use timings do not overlap with each other, or preparing a connector of a cable type F using the Reserved (Utility) terminal 121 as an antenna terminal, for example, instead of the support of the Ethernet standard (instead of type D).

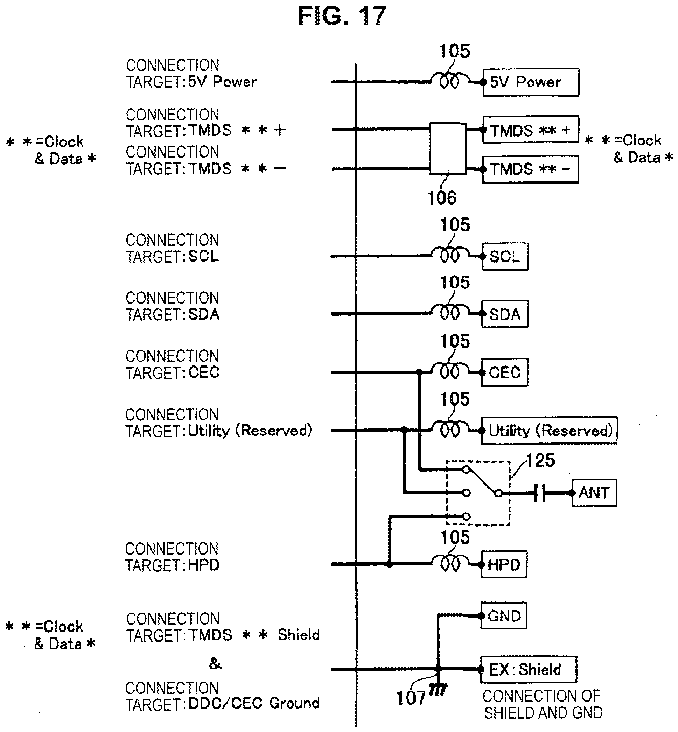

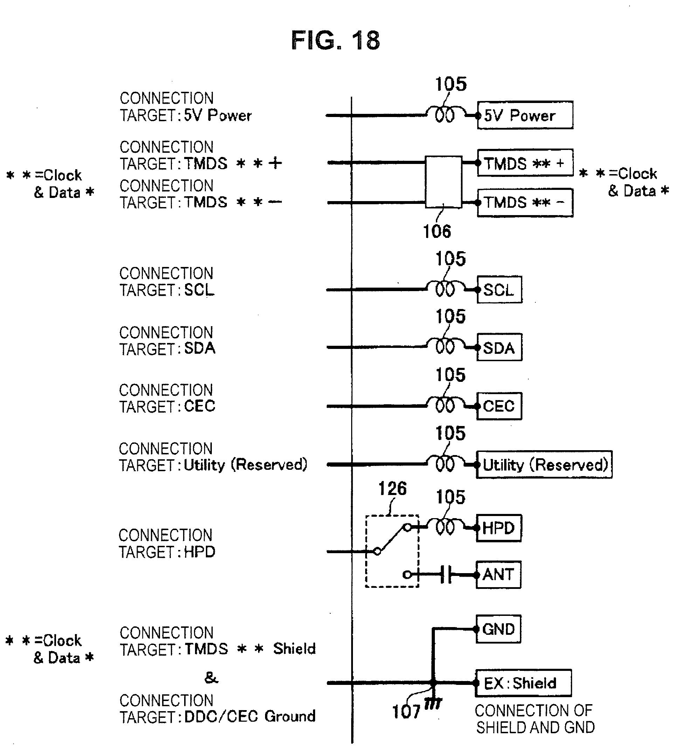

Alternatively, as illustrated in FIG. 17, a plurality of terminals among the CEC terminal, the HPD terminal 122, and the Reserved (Utility) terminal 121 can be applied as the combined antenna input terminal solely or in combination by performing function switching by using a selector 125 and changing timings. In addition, as illustrated in FIG. 18, it can be selectively used by performing the function switching by using the selector 126 and switching the function as the respective standard information terminals (for example, the HPD terminal 122 here) and the function as the antenna input terminal by the timings or the like. Moreover, the function switching can be more variously performed by using a selector such as a combination of the selector 125 and the selector 126 described above. Incidentally, in addition to the above, the present disclosure can be applied to input/output apparatuses of various interface standards, in particular, input/output apparatuses of interface standards in which the α-type terminal is defined.

It is apparent that the input/output apparatus according to the present disclosure includes, in addition to the embodiment (the USB input/output apparatus and MHL input/output apparatus) disclosed herein, various application examples and modifications without departing from the subject-matter described in the claims.

### Reference Signs List

- 17, 51, 61: coaxial shielded wire (coaxial cable)
- 10: set-side USB connector
- 15, 53, 62: coaxial wire-side USB connector
- 11, 13, 27, 30, 29, 32, 64, 65, 66, 67, 105: ferrite bead (FB)
- 12, 28, 31, 106: common mode choke
- 14, 71a to 71d: capacitor
- 16, 70: resistor
- 18: SMA connector
- 20: metal shield
- 40: eye pattern
- 41, 42: differential signal
- 43: template
- 55, 56: earphone cord
- 54: earphone jack
- 57, 58, 68, 69: earphone
- 63: microphone
- 71: power line connection terminal (1-pin)
- 72: D+ line connection terminal (2-pin)
- 73: D- line connection terminal (3-pin)
- 74: ID connection terminal (4-pin)
- 75: earth terminal (5-pin)
- 76: shielding terminal
- 77: through-hole
- 81, 82: earth face
- 83: dielectric
- 100,120: source device (master device, host device)
- 110, 130: sink device (slave device, peripheral device)
- 101: CEC terminal
- 102: HEAC terminal
- 103, 122: hot plug detection (HPD) terminal
- 121: Reserved (Utility) terminal
- 123: Ethernet (registered trademark)
- 124: Ethernet connection portion (differential amplifier)
- 125, 126: selector (switch)

## Claims

1. An input/output apparatus comprising:
a plurality of information terminals for an input/output connector provided in an information terminal device, at least one of the plurality of information terminals including both a function as a standard information terminal based on a general-purpose interface standard and a function as an antenna input terminal,
wherein the function as the standard information terminal includes a function to switch an internal operation of the information terminal device based on knowledge of a type of a connection target device due to an operation mode switching signal supplied to the information terminal.

2. The input/output apparatus according to claim 1,
wherein, as the function of the standard information terminal, a function as an information terminal to discriminate content of information by potential of an input information signal is included.

3. The input/output apparatus according to any one of claims 1 or 2,
wherein, as the function of the standard information terminal, a function as an information terminal of a lower frequency than a frequency of a received signal input from the antenna input terminal is included.

4. The input/output apparatus according to any one of claims 1 to 3,
wherein, as the function of the standard information terminal, a function as an information terminal used to discriminate a connection target device, or to discriminate whether the connection target device is connected is included.

5. The input/output apparatus according to any one of claims 1 to 4,
wherein, as the function of the standard information terminal, a function as an ID terminal used to discriminate a connection target device is included.

6. The input/output apparatus according to any one of claims 1 to 5,
wherein the function as the antenna input terminal is selectively used by one of function switching between the function of the antenna input terminal and the function of the standard information terminal and function switching among a plurality of the standard information terminals.

7. The input/output apparatus according to any one of claims 1 to 6,
wherein the standard information terminal is an MHL terminal or a terminal compliant with an HDMI standard.

8. The input/output apparatus according to any one of claims 1 to 7,
wherein an antenna signal input to the antenna input terminal is a broadcast wave signal of one of an FM band, a VHF band, and a UHF band or more than one of the bands.

9. The input/output apparatus according to claim 8,
wherein a capacitor allowing a frequency of the band to pass is connected to a line to which the standard information terminal is connected.

10. The input/output apparatus according to any one of claims 8 or 9,
wherein a terminal to which a line transmitting a differential signal is connected is provided in an input/output connector, and a common mode choke element having high impedance for the frequency of the band is connected to a terminal to which the differential signal is input.

11. The input/output apparatus according to any one of claims 1 to 10,
wherein a first connection portion to connect a coaxial cable functioning as an antenna that receives a broadband wave signal of one of an FM band, a VHF band, and a UHF band or more than one of the bands is provided in an input/output connector.

12. The input/output apparatus according to claim 11,
wherein an antenna to receive the broadcast wave signal or a coaxial connector is connected to the other end of the coaxial cable.

13. The input/output apparatus according to any one of claims 11 or 12,
wherein a second connection portion to connect an input/output cable is further provided in an input/output connector.

14. The input/output apparatus according to claim 13,
wherein the first connection portion and the second connection portion are separated on a substrate to which an input/output connector is fixed or
are connected so as to share a plurality of terminals for the input/output connector.

## Patentansprüche

1. Eingabe-/Ausgabevorrichtung, die Folgendes umfasst:
mehrere Datenanschlüsse für einen Eingabe-/Ausgabeverbinder, der in einer Datenanschlusseinrichtung vorgesehen ist, wobei mindestens einer der mehreren Datenanschlüsse sowohl eine Funktion als Normdatenanschluss auf der Grundlage einer allgemein verwendbaren Schnittstellennorm als auch eine Funktion als Antenneneingangsanschluss enthält, wobei
die Funktion als Normdatenanschluss eine Funktion zum Umschalten eines internen Betriebs der Datenanschlusseinrichtung auf der Grundlage von Wissen über einen Typ einer Verbindungszieleinrichtung durch ein Betriebsmodusumschaltsignal, das dem Datenendgerät zugeführt wird, enthält.

2. Eingabe-/Ausgabevorrichtung nach Anspruch 1, wobei
als die Funktion des Normdatenanschlusses eine Funktion als ein Datenanschluss zum Unterscheiden von Inhalten von Daten durch das Potential eines Eingangsdatensignals enthalten ist.

3. Eingabe-/Ausgabevorrichtung nach einem der Ansprüche 1 oder 2, wobei
als die Funktion des Normdatenanschlusses eine Funktion als Datenanschluss einer niedrigeren Frequenz als die Frequenz eines empfangenen Signals, das vom Antenneneingangsanschluss eingegeben wird, enthalten ist.

4. Eingabe-/Ausgabevorrichtung nach einem der Ansprüche 1 bis 3, wobei
als die Funktion des Normdatenanschlusses eine Funktion als Datenanschluss, der zum Unterscheiden einer Verbindungszieleinrichtung oder zum Unterscheiden, ob die Verbindungszieleinrichtung verbunden ist, verwendet wird, enthalten ist.

5. Eingabe-/Ausgabevorrichtung nach einem der Ansprüche 1 bis 4, wobei
als die Funktion des Normdatenanschlusses eine Funktion als Kennungsanschluss, der zum Unterscheiden einer Verbindungszieleinrichtung verwendet wird, enthalten ist.

6. Eingabe-/Ausgabevorrichtung nach einem der Ansprüche 1 bis 5, wobei
die Funktion als Antenneneingangsanschluss wahlweise durch Funktionsumschalten zwischen der Funktion des Antenneneingangsanschlusses und der Funktion des Normdatenanschlusses und Funktionsumschalten unter mehreren der Normdatenanschlüsse verwendet wird.

7. Eingabe-/Ausgabevorrichtung nach einem der Ansprüche 1 bis 6, wobei
der Normdatenanschluss ein MHL-Anschluss oder ein Anschluss, der mit einer HDMI-Norm konform ist, ist.

8. Eingabe-/Ausgabevorrichtung nach einem der Ansprüche 1 bis 7, wobei
ein Antennensignal, das in den Antenneneingangsanschluss eingegeben wird, ein Übertragungswellensignal eines FM-Bandes, eines VHF-Bandes und/oder eines UHF-Bandes ist.

9. Eingabe-/Ausgabevorrichtung nach Anspruch 8, wobei
ein Kondensator, der den Durchgang einer Frequenz des Bandes ermöglicht, mit einer Leitung verbunden ist, mit der der Normdatenanschluss verbunden ist.

10. Eingabe-/Ausgabevorrichtung nach einem der Ansprüche 8 oder 9, wobei
ein Anschluss, mit dem eine Leitung, die ein Differenzsignal überträgt, verbunden ist, in einem Eingabe-/Ausgabeverbinder vorgesehen ist und ein Gleichtaktdrosselelement, das eine hohe Impedanz für die Frequenz des Bandes besitzt, mit einem Anschluss, an dem das Differenzsignal eingegeben wird, verbunden ist.

11. Eingabe-/Ausgabevorrichtung nach einem der Ansprüche 1 bis 10, wobei
ein erster Verbindungsabschnitt zum Verbinden eines Koaxialkabels, das als eine Antenne, die ein Breitbandwellensignal eines FM-Bandes, eines VHF-Bandes und/oder eines UHF-Bandes empfängt, wirkt, in einem Eingabe-/Ausgabeverbinder vorgesehen ist.

12. Eingabe-/Ausgabevorrichtung nach Anspruch 11, wobei
eine Antenne zum Empfangen des Übertragungswellensignals oder ein Koaxialkabelverbinder mit dem anderen Ende des Koaxialkabels verbunden ist.

13. Eingabe-/Ausgabevorrichtung nach einem der Ansprüche 11 oder 12, wobei
ein zweiter Verbindungsabschnitt zum Verbinden eines Eingabe-/Ausgabekabels ferner in einem Eingabe-/Ausgabeverbinder vorgesehen ist.

14. Eingabe-/Ausgabevorrichtung nach Anspruch 13, wobei
der erste Verbindungsabschnitt und der zweite Verbindungsabschnitt auf einem Substrat, an dem ein Eingabe-/Ausgabeverbinder befestigt ist, getrennt sind oder derart verbunden sind, dass sie mehrere Anschlüsse für den Eingabe-/Ausgabeverbinder gemeinsam verwenden.

## Revendications

1. Appareil d'entrée/sortie comprenant :
une pluralité de bornes d'information destinées à un connecteur d'entrée/sortie disposé dans un dispositif de bornes d'information, au moins une borne de la pluralité de bornes d'information contenant à la fois une fonction de borne d'information normalisée basée sur une norme d'interface universelle et une fonction de borne d'entrée d'antenne,
dans lequel la fonction de borne d'information normalisée contient une fonction permettant de commuter un fonctionnement interne du dispositif de bornes d'information en fonction de la connaissance d'un type de dispositif cible de branchement apportée par un signal de commutation de mode de fonctionnement arrivant sur la borne d'information.

2. Appareil d'entrée/sortie selon la revendication 1,
dans lequel est incluse, comme fonction de borne d'information normalisée, une fonction de borne d'information servant à déterminer si un contenu d'information par le potentiel d'un signal d'information d'entrée.

3. Appareil d'entrée/sortie selon l'une quelconque des revendications 1 et 2,
dans lequel est incluse, comme fonction de borne d'information normalisée, une fonction de borne d'information d'une fréquence inférieure à une fréquence d'une entrée de signal reçue de la borne d'entrée d'antenne.

4. Appareil d'entrée/sortie selon l'une quelconque des revendications 1 à 3,
dans lequel est incluse, comme fonction de borne d'information normalisée, une fonction de borne d'information servant à déterminer un dispositif cible de branchement, ou à déterminer si le dispositif cible de branchement est branché.

5. Appareil d'entrée/sortie selon l'une quelconque des revendications 1 à 4,
dans lequel est incluse, comme fonction de borne d'information normalisée, une fonction d'ID de borne servant à déterminer un dispositif cible de branchement.

6. Appareil d'entrée/sortie selon l'une quelconque des revendications 1 à 5,
dans lequel la fonction de borne d'entrée d'antenne est utilisée sélectivement, soit par une commutation de fonction entre la fonction de borne d'entrée d'antenne et la fonction de borne d'information normalisée, soit par une commutation de fonction entre les bornes d'une pluralité de bornes d'information normalisées.

7. Appareil d'entrée/sortie selon l'une quelconque des revendications 1 à 6,
dans lequel la borne d'information normalisée est une borne MHL ou une borne compatible avec une norme HDMI.

8. Appareil d'entrée/sortie selon l'une quelconque des revendications 1 à 7,
dans lequel une entrée de signal d'antenne arrivant sur la borne d'entrée d'antenne est un signal d'onde de diffusion d'une bande FM, d'une bande VHF ou d'une bande UHF, ou de plusieurs de ces bandes.

9. Appareil d'entrée/sortie selon la revendication 8,
dans lequel un condensateur permettant à une fréquence de la bande de passer est relié à une ligne à laquelle la borne d'information normalisée est reliée.

10. Appareil d'entrée/sortie selon l'une quelconque des revendications 8 et 9,
dans lequel une borne à laquelle une ligne émettant un signal différentiel est reliée est disposée dans un connecteur d'entrée/sortie, et un élément de type bobine d'arrêt de mode commun ayant une impédance élevée pour la fréquence de la bande est relié à une borne dans laquelle le signal différentiel est introduit.

11. Appareil d'entrée/sortie selon l'une quelconque des revendications 1 à 10,
dans lequel une première partie de branchement servant à brancher un câble coaxial servant d'antenne chargée de recevoir un signal d'onde à bande large d'une bande FM, d'une bande VHF ou d'une bande UHF, ou de plusieurs de ces bandes est disposée dans un connecteur d'entrée/sortie.

12. Appareil d'entrée/sortie selon la revendication 11,
dans lequel une antenne recevant le signal d'onde de diffusion ou un connecteur coaxial est branché à l'autre extrémité du câble coaxial.

13. Appareil d'entrée/sortie selon l'une quelconque des revendications 11 et 12,
dans lequel une deuxième partie de branchement servant à brancher un câble d'entrée/sortie est également disposée dans un connecteur d'entrée/sortie.

14. Appareil d'entrée/sortie selon la revendication 13,
dans lequel le première partie de branchement et la deuxième partie de branchement sont séparées sur un substrat sur lequel un connecteur d'entrée/sortie est fixé ou sont branchées de façon à partager une pluralité de bornes du connecteur d'entrée/sortie.
